# EUROPEAN PATENT APPLICATION

(11) **EP 4 708 528 A1**
(43) Date of publication of application: **11.03.2026**
(21) Application number: 25196288.2
(22) Date of filing: 15.08.2025
(51) Int. Cl.: H01M 50/325

(54) **BATTERY CELL AND BATTERY MODULE INCLUDING THE SAME**

(30) Priority: 02.09.2024 KR 20240118778
(71) Applicant: SAMSUNG SDI CO., LTD., Yongin-si, Gyeonggi-do 17084 (KR)
(72) Inventor: CHOI, Yeongyeong, Yongin-si, Gyeonggi-do 17084 (KR)
(74) Representative: Marks & Clerk LLP

(57) **Abstract**

A battery cell includes an electrode assembly comprising a positive electrode and a negative electrode, a case accommodating the electrode assembly, the case having an open portion in one surface thereof, a cap plate part covering the open portion, the cap plate part being coupled to the case, a vent part on the cap plate part, the vent part having a gas flow path depending on an internal pressure of the case, and an opening/closing part on one surface of the case and facing the vent part, the opening/closing part configured to open and close the gas flow path.

## Description

### BACKGROUND

### 1. Field

Embodiments relate to a battery cell and battery module including the same.

### 2. Description of the Related Art

A secondary battery is a battery that may be charged and discharged, as opposed to a primary battery that is not rechargeable. Small capacity secondary batteries are used in small, portable electronic devices such as smartphones, feature phones, notebook computers, digital cameras, and camcorders, while large capacity secondary batteries are widely used as power sources for motors in hybrid and electric vehicles and as power storage batteries.

Such a secondary battery includes an electrode assembly including a positive electrode and a negative electrode, a case accommodating the electrode assembly, a vent mounted on the case, and electrode terminals connected to the electrode assembly.

The vent releases gas produced during the charging and discharging processes of the secondary battery to prevent the internal pressure from increasing excessively, and when the internal pressure increases to a preset level or greater, the vent automatically opens to regulate the pressure to reduce the risk of damage or explosion.

The above information described in the description of the related art is intended only to enhance understanding of the background of the present disclosure and may therefore include information that does not constitute the prior art.

### SUMMARY

Embodiments include a battery cell, including an electrode assembly having a positive electrode and a negative electrode, a case accommodating the electrode assembly, the case having an open portion in one surface thereof, a cap plate part covering the open portion, the cap plate being coupled to the case, a vent part (disposed) on the cap plate part, the vent part having a gas flow path (formable) depending on an internal pressure of the case, and an opening/closing part (disposed) on one surface of the case and (or while) facing the vent part, the opening/closing part configured to open and close the gas flow path (provided in the vent part).

The cap plate part may include a penetrating mounting hole, and the vent part may be coupled to the penetrating mounting hole.

The vent part includes a vent base coupled along an inner circumferential surface of the mounting hole, and a vent cover connected to an inner circumferential surface of the vent base, the vent cover being able to (or configured to) open based on a pressure in the case (or the vent cover being capable of forming the flow path).

The vent cover may include a plurality of vent covers, and a rupture groove portion having a preset depth may be in a region to which the plurality of vent covers are connected.

The rupture groove portion may be (formed to be) thinner than a region on which the rupture groove portion is not provided (or absent).

The opening/closing part may be (disposed) on one surface of the cap plate part facing the electrode assembly.

The opening/closing part may include a plate-shaped opening/closing body, and a preset region of the (plate-shaped) opening/closing body is attachable to the one surface of the cap plate part.

The (plate-shaped) opening/closing body may include (or be formed from) an elastically deformable material.

The (plate-shaped) opening/closing body may include a cut portion that is cut along a preset path.

The cut portion may comprise a plurality of cut portions, and the plurality of the cut portions may be (arranged) at preset angles.

The (plate-shaped) opening/closing body may include a plurality of (plate-shaped) opening/closing bodies, and the plurality of (plate-shaped) opening/closing bodies may be capable of overlapping in the preset region.

The (plate-shaped) opening/closing part may further include an opening/closing cover capable of contacting the (plate-shaped) opening/closing body, the plate-shaped opening/closing part being separated from the opening/closing body depending on an (or the) internal pressure of the case.

The plate-shaped opening/closing body may be provided with (or include) an opening/closing hole, and the opening/closing cover is capable of covering (or covers) the opening/closing hole.

The opening/closing cover may further comprise: a cover body covering the opening/closing hole and, (the cover body being) connected to the opening/closing cover; and a connector connecting the cover body and the (plate-shaped) opening/closing body.

Embodiments include a battery module, including a plurality of battery cells arranged in a preset direction, a module housing accommodating the plurality of battery cells, and connecting tabs electrically connecting the plurality of battery cells, wherein each of the battery cells may include an electrode assembly comprising a positive electrode and a negative electrode, a case accommodating the electrode assembly, the case having an open portion in one surface thereof, a cap plate part covering the open portion, the cap plate part coupled to the case, a vent part on the cap plate part, the vent part having a gas flow path depending on an internal pressure of the case, and an opening/closing part on one surface of the case, the opening/closing part facing the vent part, the opening/closing part being configured to open and close the flow path provided in the vent part (or to open and close the gas flow path).

The cap plate part may have a penetrating mounting hole, and the vent part may be coupled to the penetrating mounting hole.

The vent part may include a vent base coupled along an inner circumferential surface of the mounting hole, and a vent cover connected to an inner circumferential surface of the vent base, the vent cover capable of (or configured to) rupture/ing (or open) to establish the flow path.

The opening/closing part may include a plate-shaped opening/closing body, and a preset region of the (plate-shaped) opening/closing body may be attachable to the one surface of the cap plate part.

The plate-shaped opening/closing body may include a cut portion that is cut along a preset path.

The (plate-shaped) opening/closing body may include a plurality of (plate-shaped) opening/closing bodies, and the plurality of (plate-shaped) opening/closing bodies may be capable of overlapping in the preset region.

Optional features discussed in relation to one of the embodiments discussed above may, where appropriate, be applied to other embodiments.

At least some of the above and other features of the invention are set out in the claims.

### BRIEF DESCRIPTION OF THE DRAWINGS

Features will become apparent to those of ordinary skill in the art by describing in detail example embodiments with reference to the attached drawings, in which:
FIG. 1 is a perspective view schematically illustrating a battery module according to one or more embodiments of the present disclosure;
FIG. 2 is a perspective view schematically illustrating an embodiment of the battery cell of the battery module of FIG. 1;
FIG. 3 is a cross-sectional view taken along line I-I' of FIG. 2;
FIG. 4 is a view illustrating part A of FIG. 3;
FIGS. 5A and 5B illustrates the vent and the opening/closing part being opened and closed, respectively;
FIG. 6 is a plan view illustrating the opening/closing part and the cap plate according to one or more embodiments of the present disclosure;
FIGS. 7A to 7D illustrate a plurality of embodiments of the opening/closing part of the present disclosure;
FIG. 8 illustrates a vent part and an opening/closing part according to another embodiment of the present disclosure;
FIGS. 9A and 9B illustrates the vent part and the opening/closing part of FIG. 8 being opened and closed, respectively;
FIG. 10 is a plan view illustrating the opening/closing part and the cap plate according to one or more other embodiments of the present disclosure;
FIG. 11 illustrates a vent part and an opening/closing part according to one or more other embodiments of the present disclosure;
FIGS. 12A and 12B illustrate the vent part and opening/closing part of FIG. 11 being opened and closed, respectively; and
FIG. 13 is a plan view illustrating the opening/closing part and the cap plate according to one or more other embodiments of the present disclosure.

The accompanying drawings illustrate example embodiments of the present disclosure and, together with the following detailed description, serve to provide further understanding of the present disclosure, and the present disclosure is therefore not to be construed as being limited to the drawings.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey example implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

Reference will now be made in detail to embodiments, examples of which are illustrated in the accompanying drawings. The present embodiments may have different forms and should not be construed as being limited to the descriptions set forth herein. Accordingly, the embodiments are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list.

The terms and words used in this specification and the claims are not to be construed in their ordinary or dictionary sense, but rather in a sense and concept consistent with the technical idea of the present disclosure, based on the principle that the inventor may define the concept of a term as he/she sees fit to best describe his/her disclosure. Accordingly, it is to be understood that the embodiments described herein and the configurations illustrated in the drawings are only some of the most desirable embodiments of the present disclosure and are not intended to be exhaustive of the technical ideas of the present disclosure, and that there may be various equivalents and modifications that may substitute the embodiments and the configurations at the time of filing. Furthermore, when used herein, the words "comprise" and "include" and/or "comprising" and "including" are intended to specify the presence of the shapes, numbers, steps, actions, members, elements, and/or groups thereof mentioned and are not intended to exclude the presence or addition of one or more other shapes, numbers, actions, members, elements, and/or groups thereof. Furthermore, when describing embodiments of the present disclosure, "may" or "may be" may include "one or more embodiments of the present disclosure."

The expression indicating that two comparison targets are equal may mean that the two comparison targets are "substantially" equal. Therefore, the substantial equality may include a case in which a deviation considered as being at a low level in the art is present, for example, a deviation within 5% is present. Furthermore, a configuration in which a particular parameter is constant in a preset region may mean that the parameter is constant from an average point of view.

Although terms, such as "first" and "second", are used to describe various elements, the elements are not limited by these terms. These terms are used only to distinguish one element from another, and a first element may be a second element unless clearly indicated otherwise.

Throughout the specification, unless clearly indicated otherwise, each component may be singular or plural.

It is to be understood that if an element is referred to as being "above (or below)" or "on (or under)" another, it can be on an upper surface (or a lower surface) of the other element and an intervening element may be present between the element and the other element on (or below) the element.

It is also to be understood that when an element is referred to as being "connected to", "coupled to" or "joined to" another element, it can be directly connected or joined to the other element, or an intervening element may be present, or each element may be "connected to", "coupled to" or "joined to" each other through another element. Furthermore, when a portion is referred to as being electrically coupled to another portion, this may include not only a direct connection, but also a connection with another intervening element.

In the specification, unless clearly indicated otherwise, "A and/or B" may represent either A or B or both. That is, "and/or" includes all combinations or any combination of the plurality of elements enumerated. "C to D" may represent at least C and not more than D, unless clearly indicated otherwise.

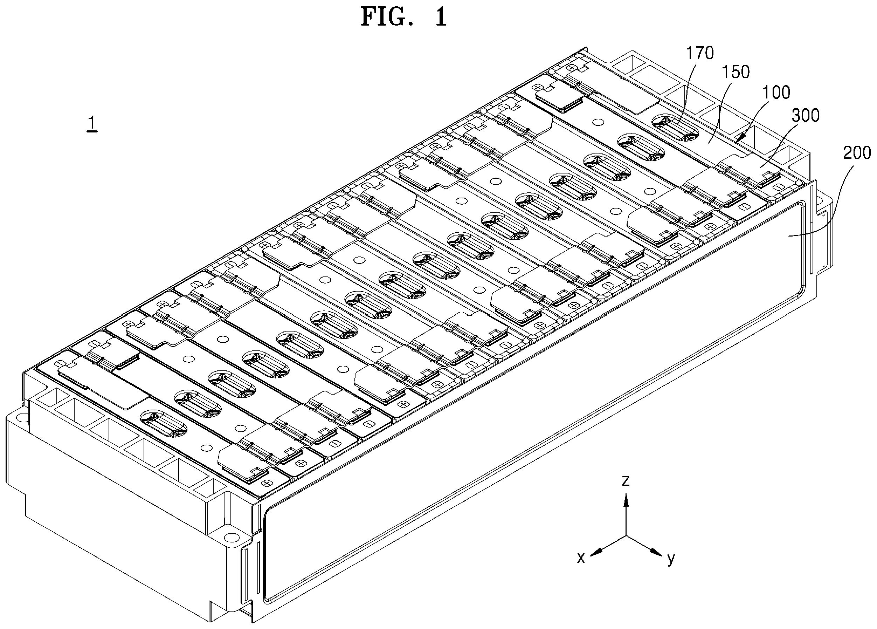

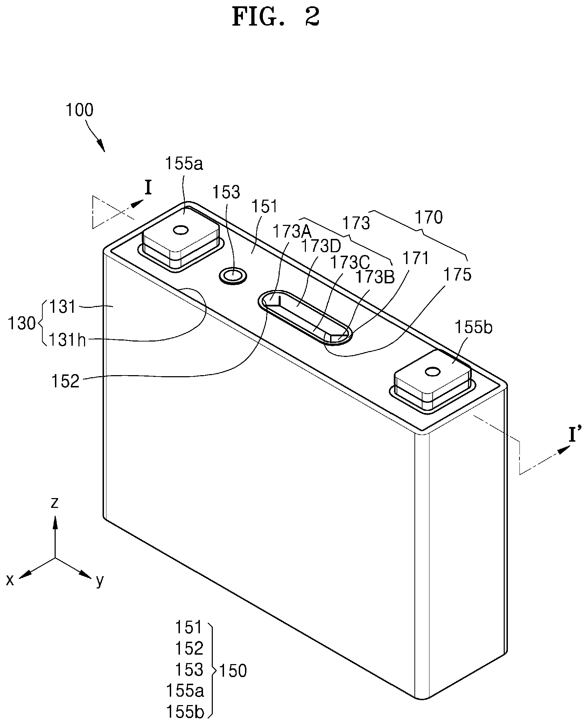

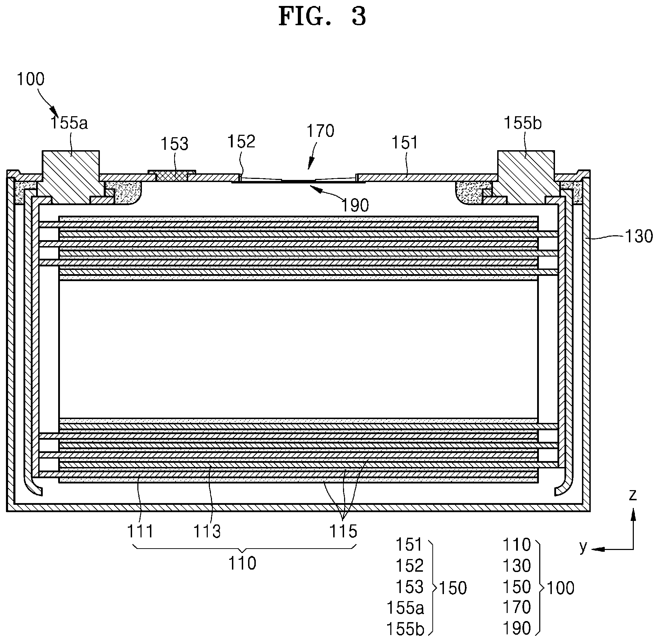

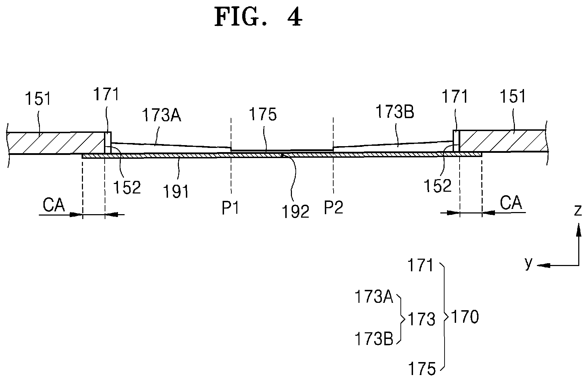

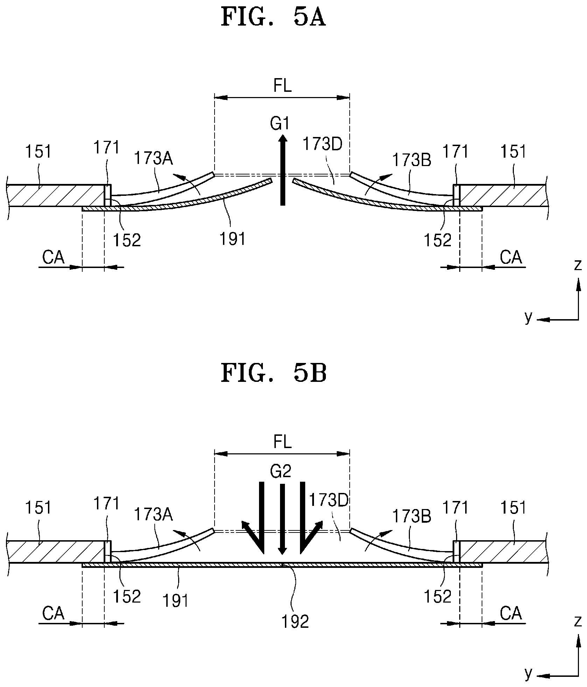

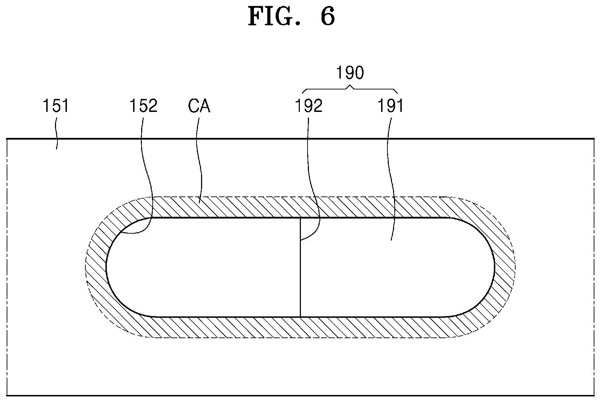

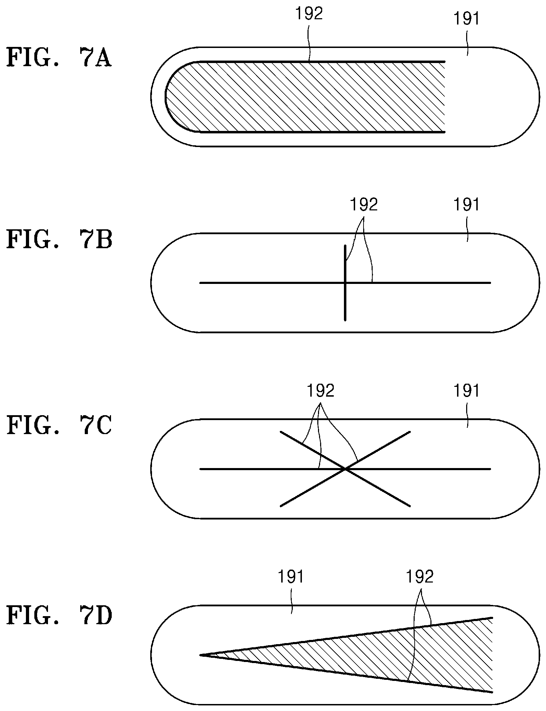

FIG. 1 is a perspective view schematically illustrating a battery module according to one or more embodiments of the present disclosure. FIG. 2 is a perspective view schematically illustrating an embodiment of the battery cell of the battery module of FIG. 1. FIG. 3 is a cross-sectional view taken along line I-I' of FIG. 2. FIG. 4 is a view illustrating part A of FIG. 3. FIG. 5 illustrates the vent and the opening/closing part being opened and closed. FIG. 6 is a plan view illustrating the opening/closing part and the cap plate according to one or more embodiments of the present disclosure. FIG. 7 illustrates a plurality of embodiments of the opening/closing part of the present disclosure.

Referring to FIG. 1, a battery module 1 may include a plurality of battery cells 100 connected in series or in parallel to increase voltage and capacity, in which the plurality of battery cells 100 may be arranged in a preset direction (e.g., the x-axis direction in FIG. 1).

The battery module 1 according to one or more embodiments of the present disclosure may include battery cells 100, a module housing 200, and connecting tabs 300. The module housing 200 accommodates the plurality of battery cells 100, in which the plurality of battery cells 100 may be arranged in a direction (e.g., the x-axis direction in FIG. 1) such that wider surfaces of adjacent battery cells 100 face each other within the module housing 200.

Referring to FIG. 1, the connecting tabs 300 electrically connect the plurality of battery cells 100, in particular, the connecting tabs 300 connect adjacent battery cells 100 in series or in parallel. In some embodiments, the connecting tabs 300 may be coupled to electrode terminals 155 described later to electrically connect adjacent battery cells 100, and may be buses (see FIG. 2).

Although the series connection has been described above as an example, it is not limited to such a structure, and various connecting structures may be used as needed. The number and arrangement of the battery cells 100 are not limited to the structure shown in FIG. 1 and may be modified as needed.

Referring to FIGS. 1 to 3, the battery cell 100 may be a rechargeable and dischargeable cell, and may include an electrode assembly 110, a case 130, a cap plate part 150, a vent part 170, and an opening/closing part 190.

The electrode assembly 110 according to one or more embodiments of the present disclosure may include a positive electrode 111 and a negative electrode 113, and specifically may be provided by winding the positive electrode 111, the negative electrode 113, and a separator 115 that is an insulator provided between the positive electrode 111 and the negative electrode 113.

However, the electrode assembly 110 may vary, and may have a structure in which a plurality of sheets of positive electrode 111 and a plurality of sheets of negative electrode 113 are alternately stacked on opposite sides of the separator 115.

The battery cell 100 according to the present embodiment is described as a lithium-ion battery cell that is prismatic. However, this is not intended to be limiting, and the present disclosure may be applicable to battery cells 100 of various shapes, such as lithium polymer battery cells or cylindrical battery cells.

Referring to FIG. 3, each of the positive electrode 111 and the negative electrode 113 may include a coated portion that is a region where an active material is applied to a current collector formed of a thin sheet of metal foil and an uncoated portion that is a region where no active material is applied.

Referring to FIGS. 1 to 3, the case 130 may accommodate the electrode assembly 110 therein, form the overall contour of the battery cell 100, and may be formed of a conductive metal such as aluminum, an aluminum alloy, or nickel-plated steel. In other words, the case 130 may provide a space in which the electrode assembly 110 is accommodated.

Referring to FIGS. 2 and 3, the case 130 may include a case body 131 shaped to surround the electrode assembly 110 therein. The case body 131 according to the present embodiment is shown having a rectangular parallelepiped shape with an opening on one side, but may be variously modified to have, for example, a cylindrical shape or a prismatic shape.

The case body 131 according to one or more embodiments of the present disclosure may be provided in a shape having an internal cavity. The internal cavity of the case 130 may accommodate the electrode assembly 110 and an electrolyte.

Referring to FIG. 2, an open portion 131h may be provided in a one surface of the case body 131. The open portion 131h may be provided by opening one surface of the case body 131, and may allow the electrode assembly 110 to be inserted into the case body 131 therethrough.

Referring to FIGS. 1 to 3, the cap plate part 150 may cover the open portion 131h and be coupled to the case 130, and may be formed from a conductive material.

The cap plate part 150 according to an embodiment of the present disclosure may include a cap plate 151 that is a region covering the open portion 131h, in which the cap plate 151 may be formed of a thin plate and welded and joined to the open portion 131h.

The cap plate 151 may protect one surface of the battery cell 100, prevent physical damage to the battery cell 100, and prevent a material outside the battery cell 100 from entering the interior of the case 130. The cap plate 151 may also provide a seal to prevent the electrolyte and the electrode assembly 110 within the case 130 from leaking out.

Referring to FIGS. 1 to 3, the cap plate 151 may have a mounting hole 152 through which the inside of the case 130 communicates with the outside and to which the vent part 170 is mounted and an injection hole 153 through which the electrolyte is injected.

The cap plate 151 according to one or more embodiments of the present disclosure may have the mounting hole 152 penetrating therethrough. The mounting hole 152 may be a region on which the vent part 170, described later, is mounted.

Referring to FIGS. 2 and 3, the mounting hole 152 may allow the inside of the cap plate 151 to communicate with the outside. In some embodiments, the mounting hole 152 may be a passage through which a gas produced within the case 130 may be released to the outside. The mounting hole 152 may also be a passage for vapor, gas, contaminants, and the like from the outside to enter the inside of the case 130.

Referring to FIG. 2, the mounting hole 152 may be provided in the shape of an ellipse extending in the longitudinal direction (i.e., the y-axis direction in FIG. 2). However, the mounting hole 152 may be implemented as a variety of modifications, such as a rectangular shape or a circular shape, that may penetrate the cap plate 151, within the technical idea of allowing the inside of the case 130 to communicate with the outside.

According to an embodiment of the present disclosure, the length of the mounting hole 152 in the width direction (i.e., the x-axis direction in FIG. 2) may be shorter than the length of the cap plate 151 in the width direction (i.e., the x-axis direction in FIG. 2), and the height of the mounting hole 152 may be equal to the height of the cap plate 151 in the thickness direction (i.e., the z-axis direction in FIG. 2).

Referring to FIGS. 1 to 3, the mounting hole 152 may be provided in the central portion of the cap plate 151. In other words, the mounting hole 152 may be provided between the plurality of electrode terminals 155a and 155b disposed on both ends of the cap plate 151. However, the mounting hole 152 may be disposed outside the plurality of electrode terminals 155a and 155b, and may be disposed to be biased toward one side relative to the central portion of the cap plate 151.

According to one or more embodiments, the mounting hole 152 may be provided as a plurality of mounting holes. The plurality of mounting holes 152 may be arranged in the longitudinal direction of the cap plate 151 (i.e., the y-axis direction in FIG. 2). Accordingly, the vent part 170 provided on the mounting hole 152 may also be provided as a plurality of vent parts.

Referring to FIGS. 2 and 3, the cap plate 151 may have an injection hole 153 provided in the shape of a hole allowing the electrolyte to be injected therethrough. The injection hole 153 may be a passage through which the electrolyte may be replenished or replaced during maintenance of the battery cell 100.

An injection stopper sealing the injection hole 153 may be fitted into the injection hole 153 according to one or more embodiments of the present disclosure. The perimeter of the outer circumferential surface of the region of the injection stopper fitted into the injection hole 153 may be formed smaller than the perimeter of the inner circumferential surface of the injection hole 153 to provide a seal preventing the electrolyte from leaking out.

The injection stopper according to one or more embodiments of the present disclosure may be formed from a material such as polyethylene, polypropylene, silicone, or the like. Accordingly, the sealing of the injection hole 153 may be improved without reaction with the electrolyte within the case 130, thereby maintaining the stability of the battery cell 100.

Referring to FIGS. 2 and 3, the injection hole 153 may be disposed on one side of the mounting hole 152, and may be disposed between the plurality of electrode terminals 155a and 155b. However, the injection hole 153 may be variously modified, such as to be disposed outside the plurality of electrode terminals 155a and 155b or disposed away from the mounting hole 152.

Referring to FIGS. 2 and 3, the electrode terminals 155 may be electrically connected to the positive electrode 111 or the negative electrode 113, and may be disposed to penetrate the cap plate 151 and protrude outward. The electrode terminals 155 may be provided in a plurality in the longitudinal direction (i.e., the y-axis direction in FIG. 2) of the cap plate 151 and may include a positive electrode terminal 155a and a negative electrode terminal 155b.

The outer circumferential surfaces of upper columns of the positive electrode terminal 155a and the negative electrode terminal 155b protruding outward from the cap plate 151 may be threaded, and may be fixed on the cap plate 151 with nuts, for example.

However, in other embodiments, the positive electrode terminal 155a and the negative electrode terminal 155b may be implemented as a variety of modifications, such as having a rivet structure to be rivet-coupled or being welded to the cap plate 151.

Referring to FIGS. 1 to 7, the vent part 170 may be disposed on the cap plate 151, in particular, in the mounting hole 152, and may allow a flow path FL of gas to be formed depending on the internal pressure of the case 130. The vent part 170 according to one or more embodiments of the present disclosure may include a vent base 171 and a vent cover 173.

As used herein, the flow path FL may refer to a path through which gas flows to be released from the inside of the battery cell 100 to the outside upon rupture of the vent part 170. However, the flow path FL is not limited thereto, and may also refer to a path through which gas or contaminants from the outside of the battery cell 100 enter the inside of the battery cell 100.

Referring to FIG. 5, the vent part 170 may be a region configured to rupture when the internal pressure of the case 130 increases or a thermal runaway occurs, and in response to the rupturing of the vent part 170, gas within the case 130 may pass through the mounting hole and escape from the battery cell 100 along the flow path FL.

Accordingly, the safety of the battery cell 100 may be ensured and the risk of overcharging, overheating, and the like may be reduced.

Referring to FIGS. 2 to 7, the vent base 171 is coupled along the inner circumferential surface of the mounting hole 152, such that the flow path FL may be formed within the vent base 171.

Accordingly, the shape of the vent base 171 may be formed to be the same as the inner circumferential shape of the mounting hole 152.

The thickness (i.e., the length in the y-axis direction in FIG. 4) of the vent base 171 according to one or more embodiments of the present disclosure may be the same as the thickness of the mounting hole 152. However, the vent base 171 may be formed thicker than the thickness of the mounting hole 152 such that a portion thereof protrudes from the cap plate 151, or may be formed thinner than the thickness of the mounting hole 152.

Referring to FIGS. 1 to 7, the vent cover 173 may be connected to the inner circumferential surface of the vent base 171 to form the flow path FL and may be integrally formed with the vent base 171. Accordingly, even if the vent part 170 ruptures, a portion of the vent cover 173 may remain fixed to the vent base 171.

Referring to FIG. 4, the vent cover 173 may be connected to the vent base 171 and disposed within the mounting hole 152, and may completely seal the mounting hole 152 to prevent outside gas from entering the interior of the case 130.

The vent cover 173 according to one or more embodiments of the present disclosure, may be configured such that the thickness thereof progressively decreases in a direction from a first end connected to the vent base 171 toward the center of the mounting hole 152. In other words, the center of the mounting hole 152 may be a region where the thickness of the vent part 170 is thinnest.

Referring to FIGS. 2 to 4, the vent cover 173 may be provided as a plurality of vent covers, in which the plurality of vent covers 173A, 173B, 173C, and 173D may be connected to adjacent vent covers 173, respectively. A rupture groove portion 175 having a preset depth may be provided in a region to which the plurality of vent covers 173A, 173B, 173C, and 173D are connected.

The rupture groove portion 175 (see FIG. 4) according to one or more embodiments of the present disclosure may be formed in the shape of straight lines on the vent cover 173. However, the rupture groove portion 175 may be implemented as a variety of modifications, such as a linear shape, a curved shape, or a shape including a plurality of straight lines disposed at preset angles.

Referring to FIGS. 2, 3, and 4, the region in which the rupture groove portion 175 is provided may be formed to be relatively thin compared to regions in which the rupture groove portion 175 is not provided.

Referring to FIG. 4, each of the plurality of vent covers 173A, 173B, 173C, and 173D may gradually decrease in thickness toward the center of the vent part 170 from a first end connected to the vent base 171, in which a stepped portion may be provided on each of portions P1 and P2 on which the rupture groove portion 175 is provided. Accordingly, the thickness of the rupture groove portion 175 may be formed to be smaller than the thickness of the thinnest region of the plurality of vent covers 173A, 173B, 173C, and 173D.

In other words, the rupture groove portion 175 may be the region of least strength in the vent part 170, and may be the first to rupture as the internal pressure of the case 130 increases.

Accordingly, when the vent part 170 ruptures due to the increasing internal pressure of the case 130, the plurality of vent covers 173A, 173B, 173C, and 173D may be separated along the rupture groove portion 175, respectively, and the flow path FL may be formed along a separated gap to allow gas within the case 130 to escape to the outside.

In one or more embodiments, when the internal pressure of the case 130 increases due to a gas produced during the charging and discharging processes of the battery cell 100, the vent part 170 may rupture faster than the case 130 and the other regions of the cap plate part 150 to release the gas.

The risk of overcharging and overheating of the battery cells 100 may also be reduced.

The rupture groove portion 175 according to an embodiment of the present disclosure may be ruptured by the internal pressure of the case 130, and the flow path FL may be formed as the rupture groove portion 175 ruptures. Accordingly, when the rupture groove portion 175 ruptures, the plurality of vent covers 173A, 173B, 173C, and 173D connected to each other may be separated from each other along the rupture groove portion 175, and the gas may escape from the inside through the separated gaps.

Referring to FIG. 2, the rupture groove portion 175 may be formed to be symmetrical about the center of the vent part 170, and during the rupturing of the vent part 170 along the rupture groove portion 175, the plurality of vent covers 173A, 173B, 173C, and 173D may also be spread symmetrically about the center of the vent part 170.

In other embodiments, the vent part 170 may be provided as a plurality of vent parts, which may be separated from each other in the longitudinal direction (i.e., the y-axis direction in FIG. 2) of the cap plate 151. Accordingly, when the internal pressure of the battery cell 100 increases, the plurality of vent parts 170 may rupture simultaneously to facilitate the release of the gas from the inside.

Referring to FIGS. 3 to 13, the opening/closing part 190 may be disposed on one surface of the case 130 to face the vent part 170, and may open and close the flow path FL provided in the vent part 170.

The opening/closing part 190 (see FIG. 6) according to one or more embodiments of the present disclosure may be disposed on one surface of the cap plate 151 facing the electrode assembly 110 (i.e., the bottom in FIG. 4). In some embodiments, the opening/closing part 190 may be attached to an attachment region CA that is provided on one surface of the cap plate 151 to extend along the perimeter of the mounting hole 152 and have a preset area size.

Referring to FIG. 4, the opening/closing part 190 may be attached to one surface of the cap plate 151 (i.e., the bottom in FIG. 4) and may also be attached to one surface of the vent part 170 (i.e., the bottom in FIG. 4). The opening/closing part 190 may be attached to the vent part 170 via an adhesive member, in which the adhesive member may be polyurethane, PVC, or silicone.

In one or more embodiments, the adhesive member may be an insulating material such as epoxy. Accordingly, heat may be prevented from passing through the space between the vent part 170 and the opening/closing part 190, and even if the battery cell 100 is overheated and undercooled, the temperature may be maintained in a preset range to ensure the stability of the battery cell 100.

Referring to FIGS. 3 to 13, an opening/closing body 191 may be provided in the shape of a plate, in which a preset region of the opening/closing body 191 may be attachable to one surface of the cap plate 151.

The opening/closing body 191 according to one or more embodiments of the present disclosure may be formed from an elastically deformable material. In some embodiments, the opening/closing body 191 may be formed from polypropylene (PP), polyethylene (PE), polyvinyl alcohol (PVA), or the like, and may freely open and close in response to the internal pressure of the case 130.

In other embodiments, each of polypropylene (PP), polyethylene (PE), polyvinyl alcohol (PVA), and the like is a material with high chemical resistance and may not react when in contact with the electrolyte accommodated within the case 130, thereby maintaining the stability of the battery cell 100.

The thickness of the opening/closing body 191 according to one or more embodiments of the present disclosure may be set in the range from 0.1 mm to 1.5 mm, desirably, from 0.5 mm to 1 mm. Accordingly, the opening/closing body 191 may be easily bent in response to the internal pressure of the case 130.

Referring to FIG. 4, the preset region of the opening/closing body 191 may be attached to the attachment region CA of the cap plate 151, and the remaining regions not attached to the cap plate 151 may be attached to one surface of the vent part 170 (i.e., the bottom in FIG. 4).

Referring to FIG. 5, when the internal pressure of the case 130 increases, the rupture groove portion 175 may rupture and the plurality of interconnected vent covers 173A, 173B, 173C, and 173D may be separated from each other, at which time the plurality of vent covers 173A, 173B, 173C, and 173D may be bent toward the outside of the battery cell 100 (i.e., the top in FIG. 5) and detached from the opening/closing body 191.

The opening/closing body 191 according to one or more embodiments of the present disclosure may be formed from an elastically resilient material, in which when the vent part 170 ruptures, the opening/closing body 191 may be bent together toward the outside of the battery cell 100 (i.e., toward the top in FIG. 5A) due to a pressure from the inside of the case 130, and return to the original position after the release of the gas from the inside is completed.

Referring to FIG. 5A, when the vent part 170 ruptures, the opening/closing body 191 bonded to the vent part 170 by an adhesive member may be detached from the vent part 170, but may remain attached to the attachment region CA of the cap plate 151.

Accordingly, the opening/closing body 191 may be stably fixed to one surface of the cap plate 151, and other regions of the opening/closing body 191, except for the region attached to the attachment region CA, may move freely within the mounting hole 152 to open and close the flow path FL.

Referring to FIGS. 4 to 7, the opening/closing body 191 may be provided with a cut portion 192 that is cut along a preset path. Accordingly, when the internal pressure of the case 130 increases and thus the gas and heat escape from the inside to the outside, the gas may escape through a gap formed by spreading of the cut portion 192.

Referring to FIGS. 7B and 7C, the cut portion 192 may be provided as a plurality of cut portions, in which the plurality of cut portions 192 may be arranged at preset angles (e.g., angles with respect to a longitudinal line through the middle of opening/closing body 191).

In one or more embodiments, referring to FIG. 7A, the cut portion 192 may be U-shaped in the longitudinal direction of the opening/closing body 191 (i.e., the y-axis direction in FIG. 2). Accordingly, when the internal pressure of the case 130 increases and the gas escapes from the inside to the outside, the corresponding cut area may be lifted toward the outside of the battery cell 100 (i.e., the top in FIG. 5A), and the flow path FL may be opened.

In another example, when the gas has completely escaped from the case 130, the U-shaped region may return to the original position by elastic resilience, thereby closing the flow path FL and blocking heat and mass exchange between the inside and the outside of the case 130.

In other embodiments, referring to FIG. 7B, the cut portions 192 may be two straight lines arranged at a preset angle. In some embodiments, the two cut portions 192 may be arranged perpendicular to each other and may be provided schematically in the shape of "+".

Accordingly, when the internal pressure of the case 130 increases, the opening/closing body 191 may be split and spread in four different directions with respect to the "+" shaped cut portions 192. Specifically, referring to FIG. 5A, the opening/closing body 191 may be bent toward the outside of the battery cell 100 (i.e., the top in FIG. 5A) and separated along the cut portions 192. At this time, the closed flow path FL may be opened to release the gas from the inside.

In another embodiment, referring to FIG. 7C, the cut portions 192 may be shaped such that three straight lines are arranged at preset angles, and specifically, the angle formed by two adjacent straight lines may be 60°.

Accordingly, the preset region of the opening/closing body 191 may be divided into six regions along the cut portions 192, in which when the internal pressure of the case 130 increases, the respective regions may be bent in six different directions with respect to the cut portions 192. The divided regions curved in different directions may also form a gap through which the gas may escape from the inside.

In another embodiment, referring to FIG. 7D, the cut portions 192 may be in the shape of two straight lines arranged at a preset angle such that preset ends thereof are connected, and may be schematically in the shape of "<".

Accordingly, when the internal pressure of the case 130 increases and thus the gas escapes from the inside to the outside, the corresponding region of the cut opening/closing body 191 may be bent and lifted toward the outside of the battery cell 100 (i.e., the top in FIG. 5A), and the flow path FL may be opened.

After the release of the gas from the inside of the case 130 is completed, the opening/closing body 191 may be restored to the original position, thereby preventing contaminants and external gases G2 from entering the case 130 (see FIG. 5B).

Referring to FIGS. 5A, 5B and 6, when the vent cover 173 ruptures, the vent cover 173 and the opening/closing body 191 attached to each other are detached from each other, and the vent cover 173 may be fixed in a shape bent toward the outside of the battery cell 100 (i.e., the top in FIG. 5A).

However, the elastically resilient opening/closing body 191 may return to the original position, thereby blocking external gases and contaminants that would otherwise enter the mounting hole 152.

In conventional battery cells, when the plurality of interconnected vent covers 173A, 173B, 173C, and 173D are separated along the rupture groove portion 175, the mounting hole 152 may not be resealed and thus the flow path FL may remain open, thereby resulting in the problems of electrolyte leakage or exposure of the electrode assembly 110 and electrolyte within the case 130 to the outside air.

The opening/closing part 190 according to the present disclosure may be disposed on one surface of either the vent part 170 or the cap plate 151 (i.e., the bottom in FIG. 4), and even if the vent part 170 is ruptured and the mounting hole 152 may not be resealed, may block the flow path FL formed in the mounting hole 152, thereby obtaining the effects of preventing the inside of the case 130 from being exposed to the outside air and extending the lifespan of the battery cell 100.

In another embodiment, even if the internal pressure of the case 130 increases again, the opening/closing part 190 may still act similarly to the vent part 170 to release the gas from the inside to the outside and return to the original position by elastic resilience.

In the following, the operating principles and effects of the battery cell 100 according to one or more embodiments of the present disclosure will be described.

Referring to FIGS. 1 to 7, the mounting hole 152 connecting the inside and the outside of the case 130 may be formed on the cap plate 151, and the vent part 170 may be mounted along the inner circumferential surface of the mounting hole 152.

Referring to FIG. 4, the opening/closing part 190 may be disposed on one surface of the vent part 170 (i.e., the bottom in FIG. 4), and the preset region of the opening/closing part 190 may be attached to one surface of the cap plate 151 (i.e., the bottom in FIG. 4).

The remaining regions of the opening/closing part 190, except for the portion attached to the attachment region CA, may be attached to the vent part 170. In the state of the battery cell 100 before the vent part 170 ruptures, the mounting hole 152 may be sealed, thereby preventing contaminants and gases from entering the inside of the case 130 from the outside and preventing the electrolyte from leaking out.

Referring to FIGS. 4 to 6, the vent part 170 may rupture when the internal pressure of the case 130 increases. In some embodiments, as the rupture groove portion 175 connecting the plurality of vent covers 173A, 173B, 173C, and 173D ruptures, the vent covers 173 may be separated from each other, thereby forming a gap.

The plurality of vent covers 173A, 173B, 173C, and 173D and the vent base 171 may be integrally formed, and one side of the plurality of vent covers 173A, 173B, 173C, and 173D may still be connected to the vent base 171.

In some embodiments, as the internal pressure of the case 130 increases, the rupture groove portion 175, which is the thinnest region of the vent part 170, may rupture and be separated from the opening/closing part 190. The plurality of vent covers 173A, 173B, 173C, and 173D may be shaped to be bent toward the outside of the battery cell 100.

Referring to FIGS. 5A, 5B, 9A,9B, 12A and 12B, the opening/closing body 191 may also be bent toward the outside of the battery cell 100 while the heat and gas are released from the inside of the case 130. At this time, each region of the opening/closing body 191 cut due to the cut portion 192 formed on the opening/closing body 191 may be separated from each other and be bent in an outward direction.

Referring to FIGS. 4 to 6, the flow path FL may be formed along the gap formed by the opening/closing body 191 being bent and spread with respect to the cut portion 192. In other words, the heat and gas within the case 130 may escape to the outside through the gap of the plurality of vent covers 173A, 173B, 173C, and 173D opened by the cut portion 192 and through the ruptured vent part 170.

When the internal pressure of the case 130 is equal to the external pressure and the release of the internal gas is completed, the plurality of vent covers 173A, 173B, 173C, and 173D may be locked in the bent shapes and may not return to the original positions.

Here, the opening/closing body 191 may be formed from an elastically resilient material and thus may return to the original position after the gas is released. Accordingly, even if the vent part 170 ruptures, the opening/closing body 191 may still seal the mounting hole 152 and prevent foreign matter from entering the mounting hole 152.

In other embodiments, the opening/closing body 191 may be bent outward to open the flow path FL when the internal pressure of the case 130 increases again and close the mounting hole 152 again to prevent the electrolyte and the electrode assembly 110 from being exposed to the outside air when the release of gas is completed.

In the following, the operating principles and effects of the battery cell 100 according to one or more embodiments of the present disclosure will be described.

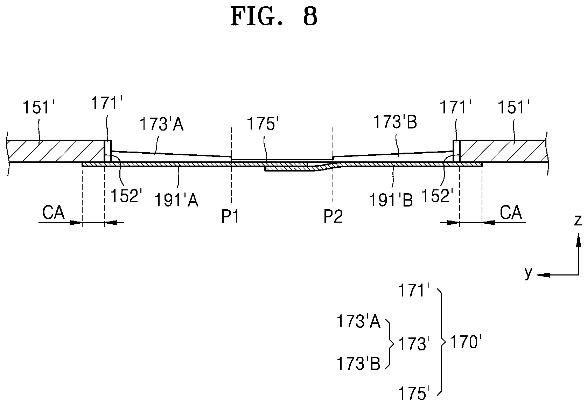

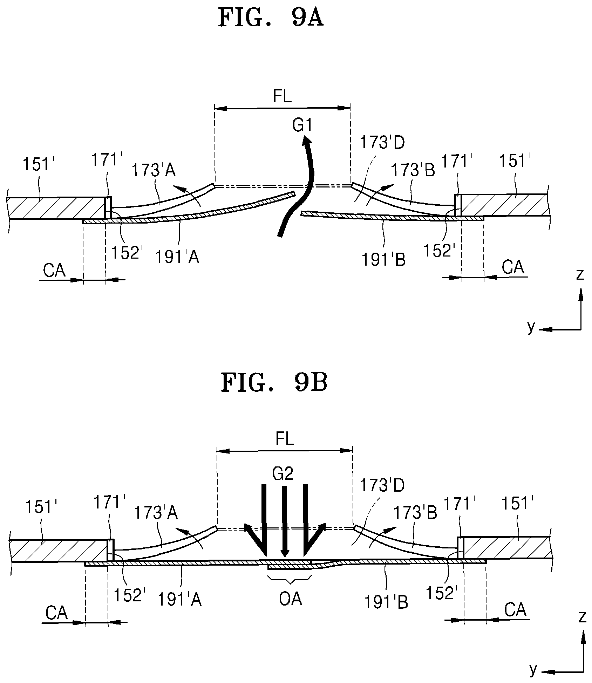

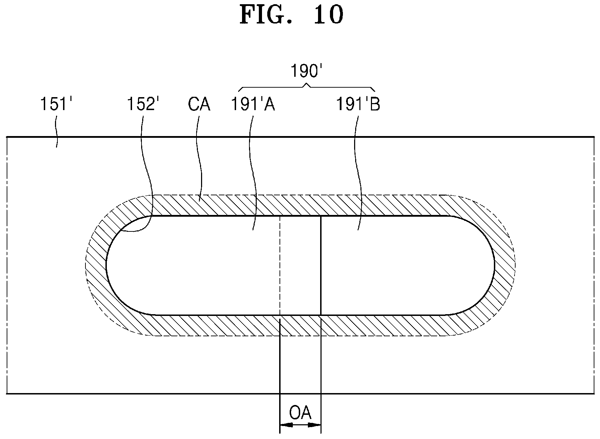

FIG. 8 illustrates a vent part and an opening/closing part according to one or more embodiments of the present disclosure. FIG. 9 illustrates the vent part and the opening/closing part of FIG. 8 being opened and closed. FIG. 10 is a plan view illustrating the opening/closing part and the cap plate according to another embodiment of the present disclosure.

Referring to FIGS. 8 to 10, a battery cell according to another embodiment of the present disclosure may include an electrode assembly, a case, a cap plate part, a vent part, and an opening/closing part 190'.

Referring to FIGS. 8 to 10, the battery cell according to another embodiment of the present disclosure differs in the configuration of the opening/closing part 190' compared to the battery cell 100 according to one or more embodiments of the present disclosure, and therefore the following description will focus on the differences.

The opening/closing part 190' according to another embodiment of the present disclosure may include a plurality of opening/closing bodies 191'A and 191'B, in which each of the plurality of opening/closing bodies 191'A and 191'B may be provided as a plate.

Referring to FIGS. 8 to 10, each of the plurality of opening/closing bodies 191'A and 191'B may be disposed on one surface of a cap plate 151' (i.e., the bottom in FIG. 8).

The plurality of opening/closing bodies 191'A and 191'B may overlap in a preset region, in particular, in a central portion of the mounting hole 151'. An overlapping region OA may be formed with a greater thickness than the non-overlapping area.

Referring to FIG. 9A, when the vent part 170' ruptures and the gas is released from the inside of the case 130' to the outside, the opening/closing body 191'A disposed at the relatively outside (i.e., the top in FIG. 9A) may be bent outward, and the flow path FL may be opened through the resulting gap.

In an embodiment, shown in FIG. 9B, when the gas is entirely released from the inside, the outwardly bent opening/closing body 191'A may return to the original position by elastic resilience and block the flow path FL formed in the mounting hole 152', thereby preventing the electrolyte and the electrode assembly 110' within the case 130' from being exposed to the outside air.

Although the present embodiment has been described as including the two opening/closing bodies 191'A and 191'B overlapping on one surface, as shown in FIG. 7, opening/closing bodies 191' may be provided in a different number, such as four or six, such that adjacent opening/closing bodies 191' may overlap in a preset region.

Accordingly, a plurality of overlapping regions OA may be arranged along the inner circumferential surface of the mounting hole 152', and may be implemented as various modifications, such as a "U" shaped region covering a portion of another region or regions that are divided in the shape of "+" and overlap each other.

The battery cell according to another embodiment of the present disclosure is identical in configuration, operating principles, and effects to the battery cell according to one or more embodiments of the present disclosure, except that the plurality of opening/closing parts 191'A and 191'B overlap in the preset region, and therefore a repeated detailed description will be omitted.

In the following, the operating principles and effects of a battery cell according to other embodiments of the present disclosure will be described.

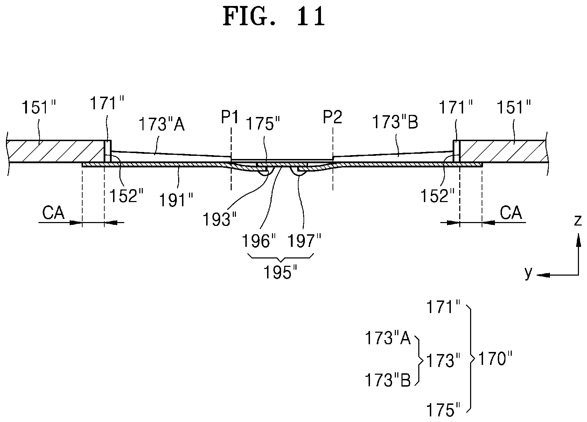

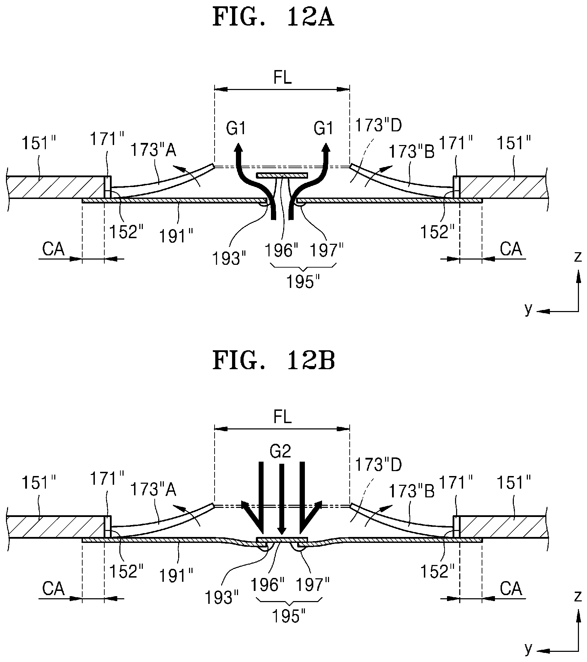

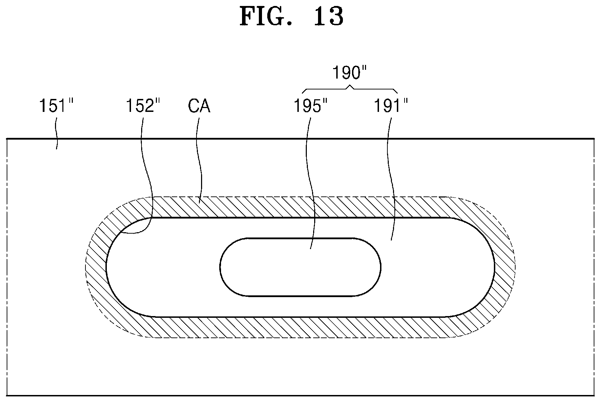

FIG. 11 illustrates a vent part and an opening/closing part according to another embodiment of the present disclosure. FIGS. 12A and 12B illustrate the vent part and opening/closing part of FIG. 11 being opened and closed, respectively. FIG. 13 is a plan view illustrating the opening/closing part and the cap plate according to another embodiment of the present disclosure.

Referring to FIGS. 11 to 13, a battery cell according to another embodiment of the present disclosure may include an electrode assembly, a case, a cap plate part, a vent part, and an opening/closing part 190".

Referring to FIGS. 11 to 13, the battery cell according to another embodiment of the present disclosure differs in the configuration of the opening/closing part 190" compared to the battery cell 100 according to one or more embodiments of the present disclosure, and therefore the following description will focus on the differences.

Referring now to FIGS. 11 to 13, an opening/closing cover 195" may include a cover body 196" and a connector 197" as components that may contact the opening/closing body 191". The opening/closing cover 195" may be separated from the opening/closing body 191" depending on the internal pressure of the case 130".

The opening/closing body 191" according to another embodiment of the present disclosure may have an opening/closing hole 193" formed therein, and the opening/closing cover 195" may cover the opening/closing hole 193". The opening/closing hole 193" may be a hollow structure formed by perforating a preset region in the opening/closing body 191".

In some embodiments, the shape of the opening/closing hole 193" may have an elliptical shape extending in the longitudinal direction of the opening/closing body 191". However, the opening/closing hole 193" may be implemented as a variety of modifications within the technical idea of forming the inside of the opening/closing body 191" in the shape of a hole and allowing the inside of the case 130" to communicate with the outside.

Referring now to FIGS. 11 to 13, a cover body 196" may cover the opening/closing hole 193", may be connected to the opening/closing cover 195", and may move up and down depending on the internal pressure of the case 130".

The connector 197" according to another embodiment of the present disclosure may connect the cover body 196" and the opening/closing body 191", and may be formed from an elastically resilient material. In some embodiments, the connector 197" may be formed from rubber, silicone, or the like.

Accordingly, when the internal pressure of the case 130" increases, the cover body 196" may be separated from the opening/closing body 191" to allow the gas G1 to be released from the inside through the opening/closing hole 193", and after the gas is released (see FIG. 12B), the cover body 196" may return to the original position and cover the opening/closing hole 193" to block the inflow of contaminants and gases from the outside.

Referring to FIGS. 11 to 13, one side of the connector 197" may be connected to the cover body 196" and the other side of the connector 197" may be connected to the opening/closing body 191". Because the opening/closing body 191" is attached to the attachment region (CA) and connected to one surface of the cap plate 151" (i.e., the bottom in FIG. 11), the cover body 196" separated from the opening/closing body 191 by the internal pressure of the case 130" may return to contact the object body and cover the opening/closing hole 193".

The connector 197" according to another embodiment of the present disclosure may be elongated and in the shape of a string or wire. However, the connector 197" may be in the shape of a figure that has a constant cross-sectional area and is connected to the opening/closing body 191" and the cover body 196".

Referring to FIG. 12A, the opening cover 195" may have a cross-sectional area smaller than the cross-sectional area of the vent part 170" and may be disposed within the vent part 170". In other words, the opening/closing cover 195" may have a cross-sectional area smaller than the cross-sectional area of the mounting hole 152 and may freely move up and down within the mounting hole 152.

Accordingly, the opening/closing cover 195" may freely move within the opening/closing body 191" so that the movement thereof is not obstructed by the vent base 171" disposed along the inner circumferential surfaces of the mounting hole 152", and may smoothly move up and down on the opening/closing body 191" to open and close the flow path FL.

In another example, the opening/closing cover 195" may be formed to have an area that is larger than the area of the opening/closing hole 193" to cover the entirety of the opening/closing hole 193" through which the inside of the case 130" communicates with the outside.

The mounting hole 152", the opening/closing body 191", and the cover body 196" according to another embodiment of the present disclosure may share the same center. Accordingly, the cover body 196" disposed on the opening/closing body 191" may move over the mounting hole 152", and may move while stably maintaining the center when opening and closing the flow path FL.

Referring to FIGS. 11A to 13, the opening/closing body 191" may be provided with the opening/closing hole 193" therein to connect the inside and the outside of the case 130". The opening/closing cover 195" covering the opening/closing hole 193" may be provided on the opening/closing body 191".

Accordingly, when the internal pressure of the case 130" increases, the cover body 196" may be separated from the opening/closing body 191", and the gas may be released from the inside through the opening/closing hole 193".

After the gas is released, the cover body 196" may be restored to the original position by the connector 197" connecting the cover body 196" and the opening/closing body 191", thereby covering the opening/closing hole 193" and blocking the inflow of contaminants and gases from the outside.

The battery cell according to another embodiment of the present disclosure may be identical in configuration, operating principles, and effects to the battery cell according to another embodiment of the present disclosure, except that the opening/closing hole 193" having a hollow structure is formed within the opening/closing body 191" and the opening/closing cover 195" capable of contacting the opening/closing body 191" and configured to cover the opening/closing hole 193" is included, and therefore repeated detailed description will be omitted.

The battery cell according to embodiments of the present disclosure has the effects that, even after the vent part is ruptured by the internal pressure of the case, the opening/closing part blocking the flow path FL may prevent the electrode assembly and the electrolyte from being exposed to the outside air, thereby increasing the lifespan of the battery cell.

The technical problem to be solved by the present disclosure is to provide a battery cell and a battery module that may be used for an extended period of time, in which even after a vent is opened, an opening/closing part may open and close a flow path formed in the vent to prevent an electrode assembly and an electrolyte within the case from being exposed to the outside air.

However, the technical problems to be solved by the present disclosure are not limited to those described above, and other problems not mentioned will be apparent to a person of ordinary skill in the art from the description of the present disclosure.

When the internal pressure of the case increases again or a thermal runaway occurs, the opening/closing part having elastic resilience may reopen the flow path FL to prevent the fire and malfunction of the battery cell.

However, the effects of the present disclosure are not limited to those described above, and other technical effects not mentioned will be apparent to a person of ordinary skill in the art from the description of the present disclosure.

Although the present disclosure has been described hereinabove with reference to the specific embodiments and the drawings, the present disclosure is not limited thereby, and various modifications and changes are possible by a person of ordinary knowledge in the art to which the present disclosure pertains, within the scope of the present invention as defined by the following claims.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A battery cell, comprising:
an electrode assembly comprising a positive electrode and a negative electrode;
a case accommodating the electrode assembly, the case having an open portion in one surface thereof;
a cap plate part covering the open portion, the cap plate part being coupled to the case;
a vent part on the cap plate part, the vent part having a gas flow path depending on an internal pressure of the case; and
an opening/closing part on one surface of the case and facing the vent part, the opening/closing part configured to open and close the gas flow path.

2. The battery cell as claimed in claim 1, wherein:
the cap plate part comprises a penetrating mounting hole, and
the vent part is coupled to the penetrating mounting hole.

3. The battery cell as claimed in claim 2, wherein the vent part comprises:
a vent base coupled along an inner circumferential surface of the mounting hole; and
a vent cover connected to an inner circumferential surface of the vent base, the vent cover configured to open based on a pressure in the case.

4. The battery cell as claimed in claim 3, wherein:
the vent cover comprises a plurality of vent covers, and
a rupture groove portion having a preset depth is provided in a region to which the plurality of vent covers are connected.

5. The battery cell as claimed in any preceding claim, wherein:
the opening/closing part comprises a plate-shaped opening/closing body, and
a preset region of the plate-shaped opening/closing body is attachable to the one surface of the cap plate part.

6. The battery cell as claimed in claim 5, wherein the plate-shaped opening/closing body includes an elastically deformable material.

7. The battery cell as claimed in claim 5 or claim 6, wherein the plate-shaped opening/closing body comprises a cut portion that is cut along a preset path.

8. The battery cell as claimed in any of claims 5 to 7, wherein:
the plate-shaped opening/closing body comprises a plurality of plate-shaped opening/closing bodies, and
the plurality of plate-shaped opening/closing bodies are capable of overlapping in the preset region.

9. The battery cell as claimed in any of claims 5 to 8, wherein the plate-shaped opening/closing part further comprises an opening/closing cover capable of contacting the plate-shaped opening/closing body, the plate-shaped opening/closing part being separated from the opening/closing body depending on an internal pressure of the case.

10. A battery module, comprising:
a plurality of battery cells according to any preceding claim, arranged in a preset direction;
a module housing accommodating the plurality of battery cells; and
connecting tabs electrically connecting the plurality of battery cells.
